# EUROPEAN PATENT SPECIFICATION

(11) **EP 0 644 069 B1**
(45) Date of publication and mention of the grant of the patent: **04.11.1998**
(21) Application number: 93910481.6
(22) Date of filing: 23.04.1993
(51) Int. Cl.: B60B 9/26, B60B 15/00, B62D 55/26

(54) **SUPPORT PART OF A VEHICLE, ITS FUNCTIONING METHOD AND VEHICLE INCORPORATING IT**
TRAGTEIL EINES FAHRZEUGES, SEINE FUNKTIONSWEISE UND DAMIT AUSGERÜSTETES FAHRZEUG
PIECE PORTEUSE D'UN VEHICULE, SON PROCEDE DE FONCTIONNEMENT ET VEHICULE L'INCORPORANT

(30) Priority: 02.06.1992 RU 3941411
(43) Date of publication of application: 22.03.1995
(73) Proprietor: SAGOV, Magomet Salikhanovich, Moscow, 117463 (RU)
(72) Inventor: SAGOV, Magomet Salikhanovich, Moscow, 117463 (RU)
(74) Representative: Popp, Eugen, Dr.
(86) International application number: RU9300092
(87) International publication number: WO9324338

(56) References cited:
- CH-A- 477 318
- FR-A- 2 567 078
- SU-A- 927 569
- SU-A- 977 223
- SU-A- 1 691 142
- US-A- 3 074 763
- A.S. ANTONOV et al., "Armeiskie Avtomobili", Teoriya, 1970, Voenizdat, (Moscow), pages 458-460.

## Description

### Technical Field

This invention relates to means of transportation and more specifically to its support parts such as wheels, crawler belts or skids of walking vehicles. In particular, the invention relates to the wheels of a transportation means, more strictly, to special constructions of the wheels including ones of high resiliency and wheels having compound rims.

This invention relates also to such means of transportation which exercise a minimized tightening and structure destructuring influence on the ground.

### Background Art

An essential problem of designing and implementation of a transportation means for movement on the bare surface (non-protected ground) is the problem of decreasing the ground structure destruction and excluding the undesirable overtightening of the ground.

This problem is particularly critical in agriculture, where the overtightening of the ground under influence of agricultural machines, especially of a great power and weight, leads to the soil structure destruction which may be irreversible to some level of influence, and finally to soil degradation.

This problem is also critical for the movement on marshy and soft ground, in particular, in subarctic regions where the tightening influence on the ground of a transportation means leads to the destruction of a weak vegetation layer and creates serious ecological problems, and for the movement on sand dunes and deserts where the coersion of a support parts of the transportation means on the ground leads to the deepening ("bogging down" or "digging in") of such parts and as a result to the sharp increase of required power and consequently to the increase of fuel consumption, increased wear and so on.

This problem has been solved in the known state of the art by increasing the contact surface of the support parts of a transportation means (wheels, crawler belts, skids of a walking vehicle) with the ground, which naturally leads to the decreasing of the unit pressure to the ground.

But the possibility of increasing the surface contact of the support parts of a transportation means with the aim of decreasing of the unit pressure to the ground is limited by constructive and clearance requirements. So, it is not always possible to reduce the tightening influence or compaction of the ground to the extent acceptable from the point of view of agriculture. There is the need in additional ways of restoration of fertility of the soil. For example, there is quite a number of inventions related to means of loosening soil tightened by support parts of a transportation means, known as the "devices for loosening soil compacted by wheels or the like" (A O1 B 37/00 according to the International Patent Classification).

### Disclosure of Invention

The aim of this invention is to provide a support part of a transportation means providing the essential reduction of a tightening and structure destructive influence on the ground. In particular, one of the aims of the invention is the creation of the support part of a transportation means which tightening influence on the soil of arable land shall be in normal limits, i.e. shall require no additional measures for restoration of fertility of the soil. Another aim of the invention is the creation of a support part of a transportation means suitable for the movement. on sandy or marshy ground.

Another aim of the invention is the creation of a method of operating the support part of a transportation means which allows to reduce its tightening and structure destructive influence on the ground to the safety level.

A further aim of the invention is to provide transportation means having the support parts, such as wheels, crawler belts or skids of a walking vehicle, providing the essential reduction of a tightening and structure destructive influence on the ground and improvement of the cross-country mobility of the transportation means.

The notion of the "normal limit" and "safety level", used above, should be clarified. It is understood as the normal limit, a natural tightening (under the gravitational forces only) of the ploughed over, loosened soil. It is achieved usually 4-6 days after the loosening. The resulting natural density of the ground is optimal for the development of the root structure of a plant. It is understood as the safety level, accordingly, the level of tightening of the ground near to the normal limit or exceeding it by a small extent only.

In achieving these aims inventors considered the question, is increasing the contact surface of the support parts of a transportation means the only way to decrease tightening influence? From the science of mechanics, the only way to decrease the unit pressure to the ground assuming a given (constant) weight is to increase the contact surface. It may be a mistake to identify only purely mechanical values as a unit pressure and the polyfunctional value as a tightening influence on such a complex system as the ground and particularly the soil, in the process of movement of the transportation means.

It was found that an essential reduction of a tightening influence or compaction of the ground is achieved if a driving or digging up of the ground is provided from under the contact surface of the support part with the ground during the process of application of the load of a transportation means through its support part to the ground. Being difficult to find a simple physical explanation for this phenomenon, the analogy with the work of a plough can be made. If you throw the plough to the earth, it will tighten the ground in proportion to the unit pressure, but if you till with the plough forcing the ground to move by its sharpened side (i.e. with the maximum unit pressure), you do not tighten the ground, to the contrary you loosen the ground increasing the fertility.

On the base of these considerations it is possible to achieve the above mentioned aims by designing the support part of the transportation means with the possibility of driving the ground from under the contact surface of the support part.

This proposal by the inventor was reflected, to some extend, in his Inventor's Certificate SU 1691142, showing the features of the preamble of claim 1, published on November 15, 1991. But at that time the essence of the phenomenon was not yet clear, and the basic essential feature of providing the drive or movement of the ground from under the contact surface of the support part was not disclosed.

The support part of a transportation means in the sense of this invention shall be understood as any support part known from the state of the art - a drive or driven wheel, crawler belt, skid of a walking vehicle and so on.

Each such support part may be functionally partitioned into the unit for connection or the support part with the rest of the transportation means, the supporting element intended for transmission of a load from the transportation means to the ground, and means for connection of such unit with the element. Taking a wheel as an example, it is easy to demonstrate that its constructive implementation can be diverse: the supporting element may be of various constructions including the compound rim, with or without a tyre, and the rim can be engaged with a hub (a "unit for connection") by various means: spokes, pivots, disk constructions (including unjointed ones) and so on.

For operation of the support part, designed in accordance with the invention, in the process of sequentially bringing the parts of supporting elements into contact with the ground during the movement of the transportation means, it is provided for the drive of the ground from under the area of contact of the support part with the ground. The simplest and most effective way for this is increasing the perimeter or circumference of the total area of contact of the supporting element with the ground, for example, by division of the supporting element into several parts, or by adjusting the shape of the perimeter i.e. by designing the supporting element in the form of several areas of contact with the ground. Passages for the ground therebetween are provided essentially perpendicular to the surface of the ground.

The notion of a passage for and driving the ground essentially perpendicular to the surface of the ground is used herein to stress that the essence of the invention lies in providing special measures to drive the ground from under the contact area of the support part, and that a side squeezing ("driving out") of the ground, which always takes place during movement on soft ground, is not enough for achieving the aims of the invention.

It was found that the effect of the free driving the ground from under the zone of pressure application (a sort of "tilling" of the ground) is such, that even decreasing the total area of contact of the supporting element while making passages for the ground (which leads naturally to increasing the unit pressure to the ground) have no undesirable influence and a reduced tightening influence on the ground is obtained. So, the support part having a developed (increased) perimeter of the contact areas with the ground exercises the reduced tightening and structure destructuring influence on the ground compared with one with the same clearance.

If the support part of the transportation means comprises the crawler belt propulsion means, such partition of the supporting element may be done by designing it in the form of two parallel endless-tracks connected, for example, by drive wheels and rollers of the crawler belt. Where there is enough distance between the drive wheels and/or rollers, the ground is driven up from the zone of pressure application between the endless-tracks and on its sides. If the dimension requirements, namely, the width of the crawler belt propulsion means so permit, the supporting element may be designed in the form of more than two parallel endless-tracks. It is understood, of course, that in the scope of the invention it is possible to design each crawler belt propulsion means with only one endless-track having the developed perimeter (increased circumference).

If the support part of a transportation means is the wheel, the partition of the supporting element may be done in the same way, i.e. by designing the wheel with two parallel rims separated by a gap and connected to each other, if necessary, by some connectors.

In some cases designing a rim (possibly with a tyre) in the form of set of sideways areas of contact with the ground, with passages for the ground between them, is preferable and more simple. Such wheel is, in essence, the wheel with the hypertrophied tread design. Nevertheless, no known treads were known which can show the effect of this invention. The aim of the known treads is the increased gripping of the ground. Moreover, the known treads are designed in such a way, that when they move on soft ground, recesses of the tread are filled in and made solid with the projections of the tread - with the aim of decreasing the unit pressure on the ground.

It is also possible to design the wheel with a compound rim built up of two rows of skids each connected to the hub by the spoke, arm or other coupling element.

If the support part of a transportation means is the skid of a walking member of the transportation means, it is possible to design the support part, besides the above mentioned variants with necessary technical modifications, in the form of a "bird foot" as it is shown in the drawings, or by any other means meeting the requirement of increasing the perimeter of the contact areas of the supporting element with the ground, which leads to driving the ground from under the contact surface of the support part with the ground.

One other preferable embodiment of the invention, related to all above mentioned kinds of the support parts, provides that the areas of contact with the ground of the supporting element are made in pairs symmetrically in respect of the direction of movement of the transportation means and designed in such a way that the angle between them becomes less than 180 degrees under the load (in the working position). Such shape of the surface of the supporting element leads to an optimal distribution of the pressure of the transportation means into the ground.

In one of the preferred embodiments of the invention such paired areas of contact with the ground may be adapted to shift (move apart) resiliently under the load in the direction transverse to the direction of movement of the transportation means. For example, in the case of the wheel with the compound rim built up of two rows of skids connected with the hub by the spokes, it is expedient to provide hard spokes hinged to the hub and spring-loaded in pairs in such a way that they push the paired skids together and let them move apart resiliently under the load of the transportation means, and to join the inner upper parts of the skid with the spoke by a resilient connection having controlled stiffness.

In another preferred embodiment of the invention, most convenient for use in transportation means intended for movement on slopes, the skids may be drafted in the form of a plate with a sharpened outer end, the plate being mounted with the controlled sloping.

### Brief Description of Drawings

Fig. 1 depicts the areas of contact of support parts of a transportation means with the ground according to the known state of the art:
   - 1-a: for the support part of a transportation means designed in the form of a wheel,
   - 1-b: for the support part of a transportation means designed in the form of a crawler belt, and
   - 1-c: for the support part of a transportation means designed in the form of a skid of a walking vehicle.
Fig. 2 depicts the profile of the ground in the right section on line 1B-1B in Fig.1, under the influence of the support part of a transportation means according to the state of the art.
Fig. 3 depicts the areas of contact of support parts of a transportation means with the ground according to embodiments of the invention:
   - 3-a: for the support part of a transportation means designed in the form of a wheel,
   - 3-b: for the support part of a transportation means designed in the form of a crawler belt,
   - 3-c1: for the support part of a transportation means in the form of a skid of a walking vehicle, in one embodiment and
   - 3-c2: for the support part of a transportation means designed in the form of a skid of a walking vehicle in another embodiment.

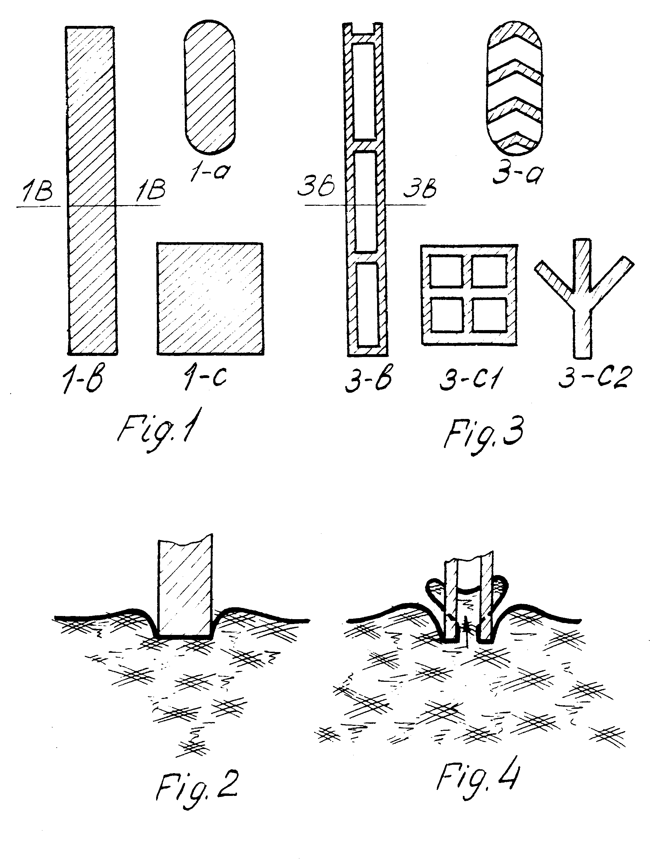

Fig. 4 depicts the profile of the ground in the right section on line 3B-3B in Fig.3, under the influence of the support part of a transportation means according to the invention.

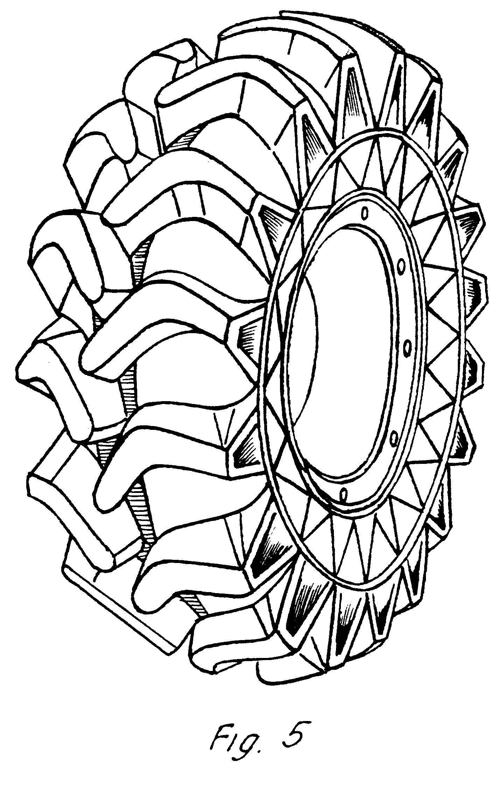

Fig.5 is the oximetry view of one of the preferred embodiments of the support part of a transportation means made in the form of a wheel according to the invention.

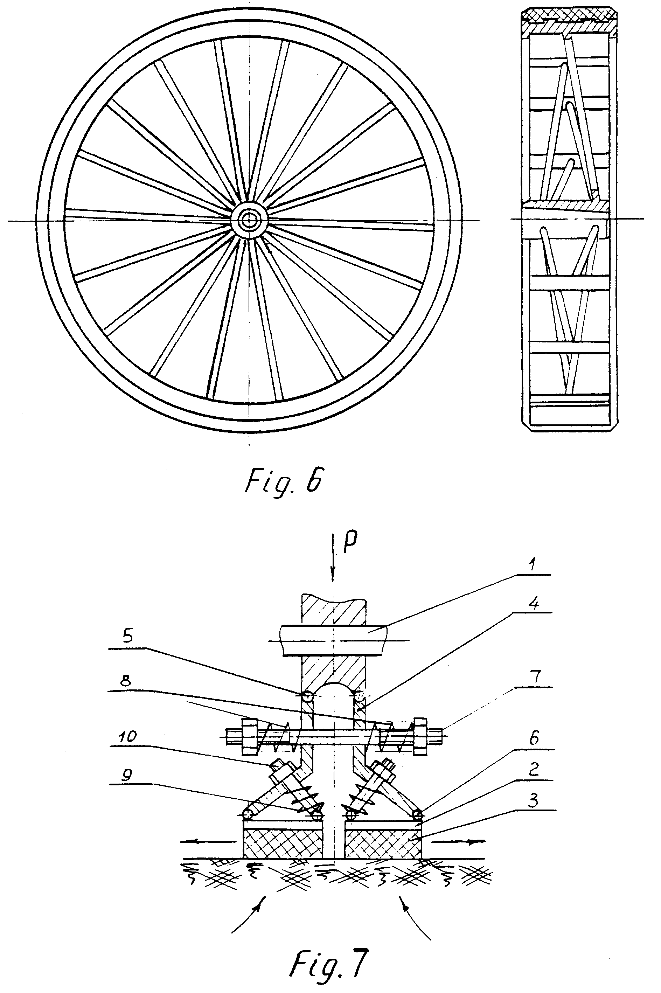

Fig.6 is the side and front view, the latter with a partial section in the upper part, of another embodiment of the support part of a transportation means made in the form of a wheel according to the invention.
Fig.7 depicts the sectional view of a support part of a transportation means, suitable equally for the use in both wheel and crawler belt embodiments, which is designed according to another embodiment of the invention.

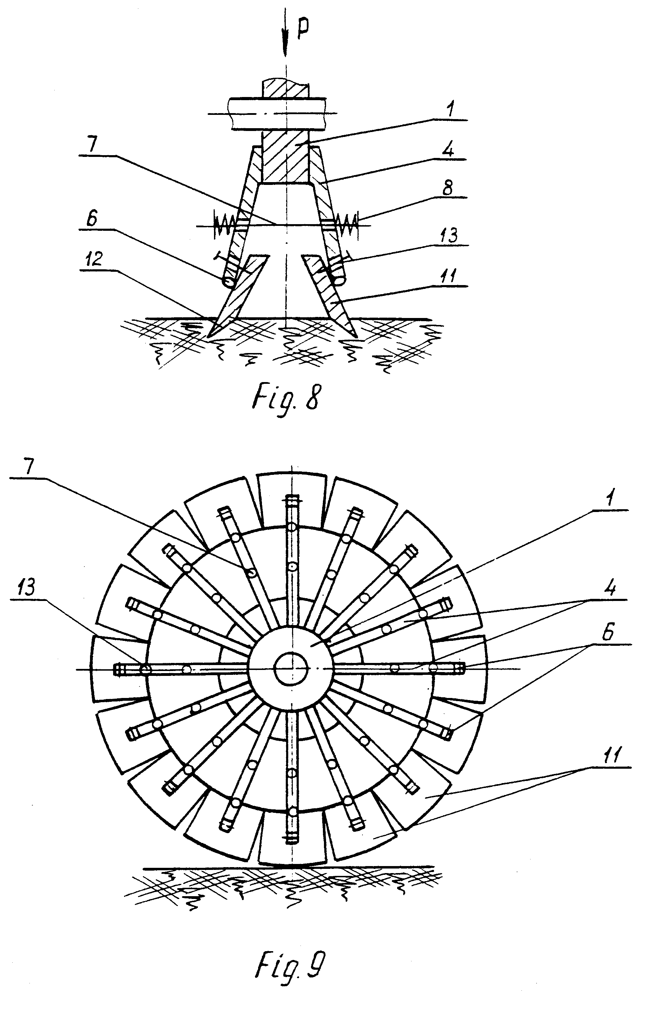

Fig.8 depicts the sectional view of a support part of transportation means, preferably for the wheel embodiment, which is intended preferably for movement on slopes.
Fig.9 is the side view of the support part of a transportation means in the wheel embodiment. according to the mode shown in Fig.8.

### Modes for Carrying Out the Invention

Fig.5 represents one of the preferred embodiments of the support part of transportation means in the form of a wheel. In this case a rim with a tyre comprises a set of side areas of contact with the ground, with passages for the ground between them. As mentioned above, such wheel may he compared with the wheel having a hypertrophied tread design, but it is obligatory according to the invention to provide the driving of the ground from under the area of contact of the support part of transportation means with the ground to the surface of the ground in the direction essentially perpendicular to the surface.

The mode for carrying out the invention shown in Fig.6 is clear from the drawing and above mentioned disclosure of the invention.

In Fig.7, showing the cross-section of a support part of transportation means suitable equally for use in both wheel and crawler belt embodiments, reference number 1 represents a unit for connection of the transportation means (this is the hub for the wheel embodiment). In this figure, a supporting element intended for transmission of a load from the transportation means to the ground, is designed in the form of a rigid member 2 (for the wheel it is a part of a compound rim) with a solid-rubber tyre 3. The means for connection in this case are the rigid spokes 4 connected to the unit for connection (in particular, the hub) 1 through hingers 5. Opposite ends of the spokes are connected with the supporting elements 2 through hingers 6. The spokes are interconnected in pairs by rigid braces 7 with resilient elements 8. The inner upper parts of the supporting elements 2 are connected additionally with spokes 4 by resilient element 9, which strength can be controlled by braces 10. Such embodiment of the support part provides the possibility of regulated (including self-regulated) driving of the ground from under the contact surface of the support part.

Fig. 8 shows the cross-section of a support part of transportation means, preferably for the wheel embodiment, designed according to the invention for movement on slopes. Position 1 here is the hub, supporting element 11 transmitting the load of the transportation means to the ground, has the sharpened outer part 12. The means of connection in this case are spokes 4 rigidly connected with hub 1. The spokes in alternate rows are interconnected by the rigid braces 7 with resilient elements 8. Inclination of the supporting element can be regulated by regulation mechanism 13.

The same details and elements are shown in Fig. 9 which is the side view of the support part of transportation means depicted in Fig. 8. This wheel can be used in two different modes of movement of the transportation means. In one mode the supporting elements are installed in parallel to the surface of the ground by rotation about hingers 6. In this case a relatively great contact surface with the ground is achieved. Depending on the load on the wheel the supporting elements can move apart, as in the previously described embodiment, increasing the possibility of driving the ground from under the contact surface of the support part.

This wheel can be used in another mode, when the supporting elements are installed under the sharpened angle to the vertical surface, which may be adjusted depending on the conditions of movement and on the state of the ground. In this case the supporting elements penetrate into the ground, providing the maximum driving of the ground. This mode is especially useful in movement on slopes; it prevents additionally the sliding of the transportation means.

### Industrial Applicability

The transportation means having the support part according to this invention can be used in agriculture for the reduction of compaction of the ground during the agricultural treatment of arable land, and also in the conditions of movement on the weak grounds such as sand dunes and deserts and marshy ground of subarctic region and the like.

## Claims

1. A support assembly for supporting and driving a transportation vehicle such as a wheel, track or skid, the assembly comprising a mounting unit (1) for securing the support assembly to the rest of the vehicle, a ground support structure for transmitting the vehicle load to the ground and connection means (4) for interconnecting the mounting unit (1) with the ground support structure, said ground support structure having a plurality of pairs of contact elements (2, 11) for contact with the ground and passages formed substantially perpendicular to the ground between each respective pair of the contact elements (2, 11) for passage of ground material moved by the contact elements,
characterized in that
said contact elements (2, 11) of said pairs are pivotally mounted to said connection means (4), and
regulation means (9, 10, 13) are provided to adjust the inclination of said contact elements (2, 11) with respect to the ground.

2. The support assembly of Claim 1, wherein said pairs of contact elements (2, 11) are arranged symmetrically with respect to the movement direction of the vehicle, said pairs being resiliently mounted to move apart under load in the direction transverse to said movement direction.

3. The support assembly according to Claim 1 or 2, wherein the total contact area of the contact elements (2, 11) with the ground decreases as said pairs move apart in transverse direction, while the perimeter of the area covered by said pairs of contact elements increases.

4. The support assembly according to Claims 1, 2 or 3, wherein the angle formed between the contact elements is less than 180 degrees under load.

5. The support assembly according to any one of the Claims 1 to 4, wherein the assembly is provided in the form of a wheel, the mounting unit (1) for securement to the rest of the transportation vehicle being a hub (1), and the ground support structure being a pair of rims (2) having respective tyres (3).

6. The support assembly according to Claim 5, wherein the rims (2) comprise two rows of skids and said connection means (4) of the hub (1) with the rims (2) are provided as spokes (4) spring-loaded in pairs.

7. The support assembly according to Claim 1, wherein the assembly is provided in the form of a crawler track propulsion means, the ground support structure (2, 11) being two parallel crawler tracks, and the connection means (4) being drive wheels and rollers of the crawler tracks.

8. The support assembly according to Claim 7, wherein the angle between the contact elements of the parallel crawler tracks is less than 180 degrees under load.

9. A transportation vehicle suitable for movement on soft ground, comprising attachment means for mounting a support assembly for supporting and driving the vehicle, the support assembly being defined by any one of claims 1 to 8.

## Patentansprüche

1. Traganordnung wie etwa ein Rad, eine Raupe oder eine Kufe zum Tragen und Antreiben eines Transportfahrzeugs, wobei die Anordnung aufweist: eine Anbringeinheit (1), um die Traganordnung an dem Rest des Fahrzeugs zu befestigen, eine Bodenstützkonstruktion, um die Fahrzeuglast auf den Erdboden zu übertragen, und eine Verbindungseinrichtung (4), um die Anbringeinheit (1) mit der Bodenstützkonstruktion zu verbinden, wobei die Bodenstützkonstruktion eine Vielzahl von Paaren von Kontaktelementen (2, 11) zum Kontakt mit dem Boden und Durchgänge hat, die im wesentlichen senkrecht zum Boden zwischen dem jeweiligen Paar der Kontaktelemente (2, 11) gebildet sind, um von den Kontaktelementen bewegtes Bodenmaterial durchzulassen,
dadurch gekennzeichnet, daß
die Kontaktelemente (2, 11) der Paare schwenkbar an der Verbindungseinrichtung (4) angebracht sind, und
Einstelleinrichtungen (9, 10, 13) vorgesehen sind, um die Neigung der Kontaktelemente (2, 11) in bezug auf den Boden zu verstellen.

2. Traganordnung nach Anspruch 1, wobei die Paare von Kontaktelementen (2, 11) symmetrisch in bezug auf die Bewegungsrichtung des Fahrzeugs angeordnet sind, wobei die Paare elastisch angebracht sind, um sich unter Last in der zu der Bewegungsrichtung quer verlaufenden Richtung auseinanderzubewegen.

3. Traganordnung nach Anspruch 1 oder 2, wobei die Gesamtkontaktfläche der Kontaktelemente (2, 11) mit dem Boden abnimmt, so wie sich die Paare in Querrichtung auseinanderbewegen, während der Umfang der von den Paaren von Kontaktelementen überdeckten Fläche zunimmt.

4. Traganordnung nach den Ansprüchen 1, 2 oder 3, wobei der zwischen den Kontaktelementen gebildete Winkel kleiner als 180° unter Last ist.

5. Traganordnung nach einem der Ansprüche 1 bis 4, wobei die Anordnung in Form eines Rads vorgesehen ist, die Anbringeinheit (1) zum Befestigen des Rests des Transportfahrzeugs eine Nabe (1) ist und die Bodenstützkonstruktion ein Paar von Felgen (2) ist, die jeweilige Reifen (3) haben.

6. Traganordnung nach Anspruch 5, wobei die Felgen (2) zwei Reihen von Kufen aufweisen und die Verbindungseinrichtung (4) der Nabe (1) mit den Felgen (2) aus Speichen (4) vorgesehen ist, die paarweise federbelastet sind.

7. Traganordnung nach Anspruch 1, wobei die Anordnung in Form einer Raupenketten-Vortriebseinrichtung vorgesehen ist, die Bodenstützkonstruktion (2, 11) aus zwei parallelen Raupenketten besteht und die Verbindungseinrichtungen (4) aus Antriebsrädern und Rollen der Raupenketten bestehen.

8. Traganordnung nach Anspruch 7, wobei der Winkel zwischen den Kontaktelementen der parallelen Raupenketten kleiner als 180° unter Last ist.

9. Transportfahrzeug, das zur Fortbewegung auf weichem Boden geeignet ist und das Befestigungsmittel zum Anbringen einer Traganordnung zum Tragen und Antreiben des Fahrzeugs aufweist, wobei die Traganordnung durch einen der Ansprüche 1 bis 8 definiert ist.

## Revendications

1. Ensemble porteur pour porter et entraîner un véhicule de transport, tel qu'une roue, une chenille ou un patin, l'ensemble comprenant une unité de montage (1) pour fixer l'ensemble porteur sur le reste du véhicule, une structure porteuse sur le sol pour transmettre la charge du véhicule au sol, et des moyens de raccordement (4) pour raccorder entre elles l'unité de montage (1) et la structure porteuse sur le sol, ladite structure porteuse sur le sol ayant une multiplicité de paires d'éléments de contact (2, 11) pour entrer en contact avec le sol et des passages formés pratiquement perpendiculaires au sol entre chaque paire respective des éléments de contact (2, 11) pour laisser passer le matériau du sol déplacé par les éléments de contact,
caractérisé en ce que
lesdits éléments de contact (2, 11) desdites paires sont montés à pivotement sur lesdits moyens de raccordement (4), et des moyens de régulation (9, 10, 13) sont prévus pour régler l'inclinaison desdits éléments de contact (2, 11) par rapport au sol.

2. Ensemble porteur selon la revendication 1, dans lequel lesdites paires d'éléments de contact (2, 11) sont disposées symétriquement par rapport à la direction du mouvement du véhicule, lesdites paires étant élastiquement montées pour s'écarter sous charge dans la direction transversale par rapport à ladite direction de mouvement.

3. Ensemble porteur selon la revendication 1 ou la revendication 2, dans lequel la zone de contact totale des éléments de contact (2, 11) avec le sol diminue lorsque lesdites paires s'écartent dans la direction transversale, tandis que le périmètre de la zone recouverte par lesdites paires d'éléments de contact augmente.

4. Ensemble porteur selon la revendication 1, la revendication 2 ou la revendication 3, dans lequel l'angle formé entre les éléments de contact est inférieur à 180 degrés sous charge.

5. Ensemble porteur selon l'une quelconque des revendications 1 à 4, dans lequel l'ensemble est procuré sous la forme d'une roue, l'unité de montage (1) pour fixation sur le reste du véhicule de transport étant un moyeu (1), et la structure porteuse sur le sol étant une paire de jantes (2) ayant des pneumatiques respectifs (3).

6. Ensemble porteur selon la revendication 5, dans lequel les jantes (2) comprennent deux rangées de patins et lesdits moyens de raccordement (4) du moyeu (1) aux jantes (2) sont prévus sous forme de rayons (4) chargés par ressort, par paires.

7. Ensemble porteur selon la revendication 1, dans lequel l'ensemble est prévu sous la forme d'un moyen de propulsion par chenilles, la structure porteuse au sol (2, 11) étant deux bandes de chenilles parallèles et des moyens de raccordement (4) étant des roues motrices et des galets des bandes de chenilles.

8. Ensemble porteur selon la revendication 7, dans lequel l'angle entre les éléments de contact des bandes de chenilles parallèles est inférieur à 180 degrés sous charge.

9. Véhicule de transport approprié pour se déplacer sur un sol mou, comprenant des moyens d'attache pour monter un ensemble porteur pour porter et entraîner le véhicule, l'ensemble porteur étant défini par l'une quelconque des revendications 1 à 8.
